(19)

Europäisches
Patentamt
European
Patent Office
Office européen
des brevets

(11) **EP 2 262 093 A1**

(12) **EUROPEAN PATENT APPLICATION**

(43) Date of publication:
**15.12.2010 Bulletin 2010/50**

(51) Int Cl.:
*H02M 7/5388* (2007.01)    *H02J 3/38* (2006.01)

(21) Application number: **10165203.0**

(22) Date of filing: **08.06.2010**

(84) Designated Contracting States:
**AL AT BE BG CH CY CZ DE DK EE ES FI FR GB GR HR HU IE IS IT LI LT LU LV MC MK MT NL NO PL PT RO SE SI SK SM TR**
Designated Extension States:
**BA ME RS**

(30) Priority: **08.06.2009  IT MI20091000**

(71) Applicant: **CA.TO.BO. S.n.c. di Cavalleretti Lavia & Tondelloni Daniele**
**43029 Traversetolo (Parma) (IT)**

(72) Inventors:
• **Barater, Davide**
**43029, Traversetolo (Parma) (IT)**

• **Crinto, Andrea Stefano**
**43029, Traversetolo (Parma) (IT)**
• **Franceschini, Giovanni**
**43029, Traversetolo (Parma) (IT)**
• **Lorenzani, Emilio**
**43029, Traversetolo (Parma) (IT)**
• **Riboli, Giuseppe**
**43029, Traversetolo (Parma) (IT)**

(74) Representative: **Tansini, Elio Fabrizio**
**Bugnion S.p.A.**
**Viale Lancetti 17**
**20158 Milano (IT)**

(54) **DC-AC converter, in particular for providing power supply from a solar panel to a mains power supply**

(57)    A DC-AC converter, in particular for providing electric energy from a solar panel to an electric network, comprising: an input section (10) for receiving a substantially direct voltage; an H-bridge (20) adapted to receive said substantially direct current through said input section (10) and designed to output a substantially alternating voltage, said H-bridge (20) being drivable at least in the following conditions: at least one operating condition, at which electric energy is supplied to said electric network (2); a first and a second recirculation condition, at which a current flows through at least part of said H-bridge (20), and no electric energy is supplied to said electric network (2). The converter (1) further comprises: an output section (40) to supply said substantially alternating current to said electric network (2); an uncoupling module (50) operatively interposed between said input section (10) and said H-bridge (20) and configured for uncoupling said input section (10) from said H-bridge (20) at said first and second recirculation conditions of said H-bridge (20).

FIG 2

**Description**

The present invention relates to a DC-AC converter. This converter can be in particular used for supplying electric energy from a solar panel to an electric network. The electric network to which the energy is supplied can in turn be an alternating-current supply network.

It is known that solar panels typically supply a direct voltage resulting from conversion of the solar energy into electric energy; this direct voltage is then converted into an alternating voltage to be then used for the most different types of loads.

Owing to the stray capacity between the photovoltaic panels and the ground connection, important leakage currents can flow thereon due to the connection, in the medium-low voltage transformation cabins, of the neutral wire of the electric network to the ground.

The architecture mostly adopted for the DC-AC converter is the so-called "H-bridge", made up of four switches operated by a PWM modulation. One of the most efficient PWM modulations is that referred to as "single-pole" modulation. This, however, cannot be used in transformerless architectures, because it would cause an unacceptable leakage current to the ground.

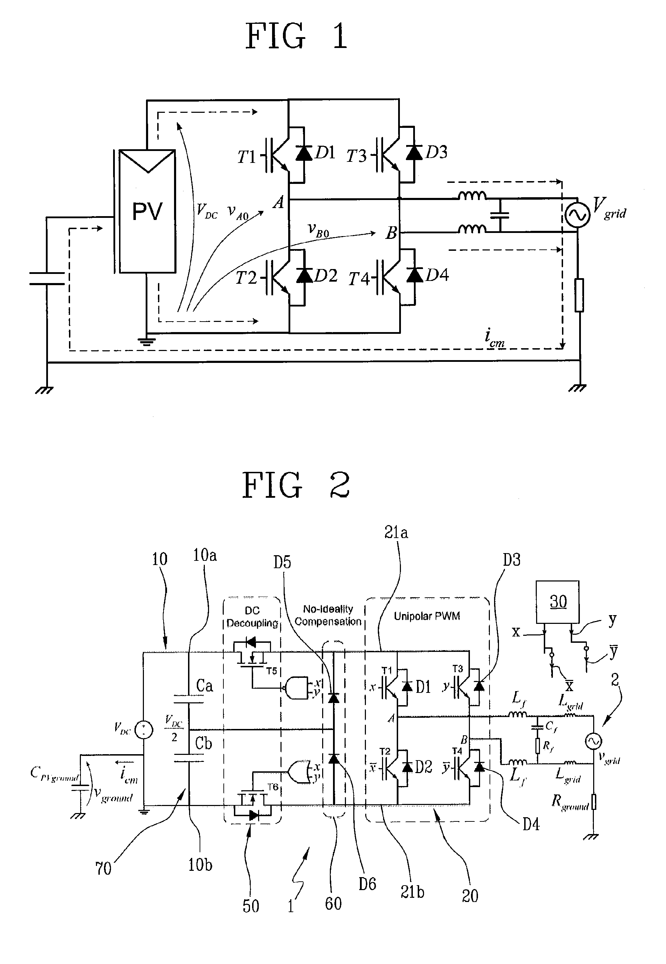

The block diagram of a transformerless converter with an architecture based on an H-bridge, is shown in Fig. 1.

In this figure 1 it is highlighted the path of the leakage current to the ground $i_{cm}$ which is coincident with the common-mode current present at the output of the power converter. The figure also shows the resonant circuit on which the common-mode current flows. The amount of the common-mode current greatly depends on the form of the common-mode voltage outputted from the H-bridge. Referring to Fig. 1, the common-mode voltage is defined as:

$$v_{cm} = \frac{v_{A0} - v_{B0}}{2}$$

In order to keep the leakage current to the ground low, it is necessary that the harmonic content of the common-mode voltage, a forcing component of the resonant circuit, be reduced as much as possible. Ideally, a constant common-mode voltage is wished.

With reference to Fig. 1, it is possible to calculate the instantaneous common-mode voltage imposed by a classic single-pole modulation. This is shown for a PWM switching-over period during the positive half cycle of the voltage imposed by the network (i.e. the alternating current supply network, to which the energy outputted from the converter is provided).

Indicating with $v_{AB} = v_{A0} - v_{B0}$ the output voltage of the H-bridge, the four configurations taken by the H-bridge operated by a single-pole configuration can be identified.

1) T1, T4 On (T2 and T3 Off): $v_{AB} = V_{DC}$

$$v_{cm} = \frac{V_{DC}}{2}$$

2) T2, T4, D2 On: $v_{AB}$ = 0. Low recirculation through D2, T4, $v_{cm}$ = 0. $v_{AR}$ = 0

3) T1, T4 On (T2 and T3 Off): $v_{AB} = V_{DC}$

$$v_{cm} = \frac{V_{DC}}{2}$$

4) T1, T3, D3 On: $v_{AB}$ = 0. High recirculation through T1, D3, $v_{cm} = V_{DC}$. $v_{AR}$ =0

The common-mode voltage varies between 0 and $V_{DC}$ giving origin to a high leakage current to the ground.

In order to limit the leakage current to the ground it is necessary to minimise the harmonic content of $v_{cm}$ as much as possible. A PWM modulation capable of ideally maintaining the common-mode voltage constant is the bipolar modulation. In fact this, under the same operating conditions as previously described, can be represented in two configurations alone:

1) T1 and T4 On (T2, T3 Off) : $v_{A0} = V_{DC}$ $v_{B0} = 0$

$$v_{cm} = \frac{V_{DC}}{2}$$

2) T2 and T3 On (T1, T4 Off): $v_{A0}$ = 0 $v_{B0} = V_{DC}$

$$v_{cm} = \frac{V_{DC}}{2}$$

In this case the common-mode voltage ideally remains always constant. The switching-over frequency and the output LC filter being the same, the maximum value of the current oscillation at the switching-over frequency is however four times higher with respect to the single-pole modulation. To obtain the same amplitude of current oscillation it is necessary to increase the switching-over frequency and/or increase the output LC filter. In addition to the above, during the current recirculation steps there is an energy exchange between the output inductances of the converter and the capacitors' bank of the DC Bus further deteriorating the converter's efficiency.

Accordingly, it is an aim of the invention to make available a DC-AC converter based on a single-pole modulation, capable of greatly limiting the leakage currents to the ground as compared with a classic single-pole modulation.

Another aim of the invention is to make available a DC-AC converter allowing the advantages of the single-pole modulation to go on being used also in transformerless architectures.

Another aim of the invention is to provide a DC-AC converter which can be advantageously used in combination with solar and/or photovoltaic panels.

A further aim of the invention is to make available a DC-AC converter that is able to output electric power with a substantially unitary power factor and low harmonic distortion.

A still further aim of the invention is to provide a DC-AC converter having a simple structure of easy manufacture and involving low production costs.

The foregoing and still further aims are substantially achieved by a DC-AC converter according to the features recited in the appended claims.

Further features and advantages will become more apparent from the description of a preferred but not exclusive embodiment of the invention. This description is provided hereinafter with reference to the accompanying drawings, given by way of non-limiting example, in which:

- Fig. 1 shows a converter in accordance with the known art;
- Fig. 2 shows a DC-AC converter according to the invention;
- Figs. 3 and 4 show the converter of the invention, in which a particular modulation is applied, together with wave forms representative of electric magnitudes used in the converter itself at different operating configurations.

With reference to the drawings, a DC-AC converter according to the invention has been generally identified by reference numeral 1.

As mentioned above, converter 1 can be advantageously used for converting the electric energy stored by solar panels (direct voltage) into alternating voltage.

This alternating voltage can be for instance supplied, through an output section 40, to an electric supply network 2 operating at 220 V, 60 Hz for example.

In the accompanying figures the network 2 is represented through an alternating voltage generator Vgrid.

However, the invention can also apply to different types of alternating supply networks, and more generally to different types of loads asking for an alternating voltage as an input supply.

In more detail, converter 1 is modulated according to a PWM (Pulse Wide Modulation) technique to allow a single-phase-network connection of photovoltaic energy sources PV without any galvanic insulation between the panels and the electric network 2.

The DC-AC converter 1 can be preceded by one or more DC-DC stages interposed between the converter 1 itself and the photovoltaic panel PV (or photovoltaic panels if a plurality of panels is provided).

The DC-AC converter 1 carries out injection to the network of electric power with a unitary power factor and low harmonic distortion.

As diagrammatically shown in Fig. 1, converter 1 has an input section 10 for receiving a substantially continuous input voltage $V_{DC}$.

The input voltage $V_{DC}$ comes from a solar panel, a photovoltaic panel or a similar energy source.

Preferably the input section 10 comprises a first and a second terminal 10a, 10b.

Converter 1 further comprises an H-bridge 20, adapted to receive the direct voltage $V_{DC}$ through the input section 10 and designed to output a substantially alternating voltage $V_{AC}$.

The H-bridge 10 has a first and a second input terminal 21a, 21b, that can be connected to the first and second terminals 10a, 10b of the input section 10, respectively.

The H-bride 20 is drivable at least in the following conditions:

- at least one operating condition in which the network 2 is supplied with electric energy, i.e. an operating condition in which the output voltage of the H-bridge (voltage $V_{AB}$) is imposed. With reference to Fig. 2, the output voltage $V_{AB}$ can be imposed equal to $+V_{DC}$ or to $-V_{DC}$. In this step the common-mode voltage is substantially constant and equal to $v_{cm}=V_{DC}/2$);
- a first and a second recirculation condition, in which a current flows through at least part of the H-bridge and no electric energy is supplied to the electric network 2, i.e. conditions in which the current injected to the network is caused to recirculate through the switches T1, T3 of the high part of the H-bridge (the so-called "high-recirculation" condition of the H-bridge), or through the two switches T2, T4 of the low part of the H-bridge (the so-called "low-recirculation" condition of the H-bridge).

In greater detail, the H-bridge 20 is modulated according to a single-pole PWM technique. Preferably, for each PWM period (of a duration equal to $T_{PWM}=1/f_{PWM}$, wherein $f_{PWM}$ is the PWM frequency) converter 1 passes through the following conditions subsequent in time:

- a first operating condition at which the electric network 2 is supplied with electric energy; under this condition, the output voltage of the H-bridge is imposed to a value $V_{AB}=+V_{DC}$ or $V_{AB}=-V_{DC}$ depending on the positive or negative half cycle of the network voltage, respectively;
- a first recirculation condition at which a current flows through at least part of the H-bridge 20, and no electric energy is supplied to the electric network 2;

- a second operating condition at which the electric network 2 is supplied with electric energy; under this situation, the output voltage of the H-bridge is imposed to a value $V_{AB}=+V_{DC}$ or $V_{AB}=-V_{DC}$, depending on the positive or negative half cycle of the network voltage, respectively;
- a second recirculation condition at which a current flows through at least part of said H-bridge 20, and no electric energy is supplied to the electric network 2.

In the positive half cycle of the network voltage, the imposition of the desired output voltage $V_{AB}=+V_{DC}$ takes place by turning transistors T1 and T4 on, while in the negative half cycle of the network voltage, the desired voltage $V_{AB}=-V_{DC}$ will be obtained by turning on transistors T2 and T3.

Referring to the positive half cycle of the network voltage the following recirculation conditions will occur.

In the first recirculation condition ("low" recirculation, because it involves circuit elements that in Fig. 2 are represented in the low part of the H-bridge 20), transistors T1 and T3 are inhibited, and current recirculation takes place through transistors T2, T2 and diode D2.

In the second recirculation condition ("high" recirculation because it involves circuit elements that in Fig. 2 are represented in the high part of the H-bridge 20), transistors T2 and T2 are inhibited, and current recirculation takes place through transistors T1 and T3, and diode D3.

Further accomplishment details will be provided in the following.

Advantageously, converter 1 is provided with a control unit 30 configured for driving the H-bridge 20 according to the above described art.

The control unit 30 can be made as a microcontroller for example, which is programmed for outputting said PWM signal for the single-pole modulation of the H-bridge 20.

Advantageously, converter 1 further comprises an uncoupling module 50, operatively interposed between the input section 10 and the H-bridge 20, and configured for uncoupling the input section 10 from the H-bridge 20 at the first and second recirculation conditions of said H-bridge 20.

In other words, through the uncoupling module 50, the H-bridge 20 is caused not to be electrically connected to panel PV during the recirculation steps provided by the single-pole modulation.

Preferably, the uncoupling module 50 too is operatively interlocked with the control unit 50.

Practically, the uncoupling module 20 is drivable at least in the following conditions:

- a connection condition, at which an electric connection is allowed between the input section 10 and the H-bridge 20;
- a first and a second uncoupled condition, at which this connection is not allowed.

Therefore, the uncoupling module 50 is driven in the connection condition, when the H-bridge 20 is in an operating condition.

The uncoupling module 50 on the contrary is driven in the first or in the second uncoupled condition respectively, when the H-bridge 20 is in the first or second recirculation condition.

In the preferred embodiment, the uncoupling module 50 comprises:

- a first switch, configured for uncoupling the first terminal 10a of the input section 10 from the first input terminal 21a of the H-bridge 20 at the second recirculation condition;
- a second switch, configured for uncoupling the second terminal 10b of the input section 10 from the second input terminal 21b of the H-bridge 20 at the first recirculation condition.

Preferably, in the first recirculation condition the first switch is "closed" and therefore enables a connection between the first input terminal 21a of the H-bridge 20 and the first terminal 10a of the input section 10.

Preferably, in the second recirculation condition the second switch is "closed" and therefore enables a connection between the second input terminal 21b of the H-bridge 20 and the second terminal 10b of the input section 10.

In the preferred embodiment, shown in Fig. 2, the first and second switches are made as two transistors T5, T6.

Preferably, converter 1 further comprises a compensation module 60. It is merely a module for compensating the nonidealities (dissymmetries) of the semiconductor switches used in converter 1. Operation of converter 1 remains unchanged even in the absence of the two diodes D5, D6 of the compensation module 60. They are only used for reducing possible oscillations of the common-mode voltage outputted from converter 1, which oscillations are determined by dissymmetries in the semiconductor switches.

Preferably, the compensation module 60 is interposed between the input section 10 and the H-bridge 20, and in particular between the uncoupling module 50 and said H-bridge.

For instance, the compensation module 60 can be made using a pair of diodes D5, D6 disposed, as shown in Fig. 2, between the input terminals 21a, 21b of the H-bridge 20.

Advantageously, a voltage divider 70 is associated with the compensation module 60 to determine a reference value to which the common-mode voltage is maintained.

In particular, the voltage divider 70 can consist of a pair of capacitors Ca, Cb substantially having the same capacity and connected between the terminals 10a, 10b of the input section 20, as shown in Fig. 2 by way of example.

Note that the node N1 separating capacitors Ca, Cb is connected to the node N2 separating the diodes D5, D6 of the compensation module 60.

In the light of the above, it is possible to state that the architecture being the object of the invention adds two other switches to the traditional H-bridge, which switches are controlled on the DC side of the H-bridge itself, in order to enable use of the advantages of the single-pole modulation to be continued also in transformerless architectures. Therefore the number of the controlled switches goes from four to six, with respect to the known art.

The two diodes D5, D6 of the compensation module 60, of low power, are optional in the topology being the object of the invention. Their presence is only able to improve the performance of the DC-AC converter in the presence of asymmetric switching over of the controlled switches. The possible presence of same allows a limitation, by a factor equal to 1/2, of the maximum voltage at the controlled switches T5 and T6 to be ensured, therefore obtaining a better performance/cost ratio, due to them, if they are made using the Metal Oxide Semiconductor technology.

It should be also noted that diodes D5 and D6 are not substantially used for carrying out the mentioned current "recirculation" steps. In fact, in the circuit of the invention the recirculation current is caused to fully flow in the transistors of the H-bridge and, as said, does not concern diodes D5, D6.

Advantageously, the transistors T1-T4 of the H-bridge can be driven at different frequencies from each other. In particular, two switches of the H-bridge can change over at the network frequency, while switching-over of the two others is at the PWM frequency, i.e. a high frequency. For instance, transistors T1, T3 of the high part of the H-bridge change over to a first switching-over frequency, while transistors T2, T4 of the low part of the H-bridge change over to a second switching-over frequency, different from said first switching-over frequency.

In the preferred embodiment, the role of the switches carrying out switching-over to the network frequency and PWM frequency is reversed at each half cycle (each 10 ms in case of a network frequency of 50 Hz) of the network voltage.

Preferably, during the positive half-waves of the network voltage, the first switching-over frequency is equal to the PWM frequency, while the second switching-over frequency is equal to the network frequency.

Preferably, during the negative half-waves of the network voltage, the first switching-over frequency is equal to the network frequency, while the second switching-over frequency is equal to the PWM frequency.

In this manner, with respect to the single-pole modulation, there is the possibility of switching over only two of the four transistors of the H-bridge to the PWM frequency, and therefore less power losses of the "switching" type are caused.

As mentioned above, the H-bridge 20 is operated with a single-pole modulation: signals $x$, $\bar{x}$ e $y$, $\bar{y}$ (Fig. 2) represent the commands of the two "legs" of the H-bridge 20, provided by the control unit 30. The two added switches T5 and T6 are turned off concurrently with the current recirculation on the high and low side respectively of the H-bridge 20.

The two command signals of T5 and T6 can be merely obtained, starting from the commands $x$, $y$, through the OR and NAND logic operators, as shown by way of example in Fig. 2.

During the current recirculation steps, voltages $V_{A0}$ and $V_{B0}$ are wished to be substantially equal to $V_{DC}/2$. In the presence of symmetric switching-over operations by all the controlled switches, by virtue of turning off of T5 at the beginning of the high recirculation (second recirculation condition) or turning off of T6 at the beginning of the low recirculation (first recirculation condition), voltages at the nodes A and B go from a starting value equal to $V_{DC}$ or 0 to a common value equal to $V_{DC}/2$.

In the presence of asymmetric switching-over operations the contact point between two voltages $V_{A0}$ and $V_{B0}$ could no longer take place at $V_{DC}/2$ causing a variation in the common-mode voltage and therefore an increase in the leakage currents to the ground.

To this aim, the compensation module 60, preferably comprising diodes D5 and D6, and the voltage divider 70, as shown in Fig. 2, are introduced so as to maintain the common-mode voltage outputted from the H-bridge 20 also in the presence of asymmetric switching-over operations of the controlled switches.

As an alternative to diodes D5, D6, two further controlled switches can be used which are able to impose, during the current recirculation steps, the voltages on the high or low side of the H-bridge 20 to a value equal to $V_{DC}/2$.

From the point of view of operation, the following is to be noted.

As mentioned above, the switching-over period of converter 1 can be divided into 4 time intervals alternating energy supply to the electric network 2 with current recirculation conditions.

These time intervals are hereinafter listed, together with the operation conditions (ON or OFF) of the different switches.

1) First operating condition: T1, T4, T5,T6 ON (T2 and T3 OFF) ; $v_{AB}$ = $V_{DC}$,

$$v_{cm} = \frac{V_{DC}}{2}$$

2) First recirculation condition: T2, T4, T5, D2 ON (T1, T3, T6 OFF); $v_{AB}$=0; recirculation on the low side of the H-bridge through T4, D4;

$$v_{cm} = v_{A0} = v_{B0} = \frac{V_{DC}}{2}$$

3) Second operating condition: T1, T4, T5, T6 ON (T2 and T3 OFF);

$$v_{AB} = V_{DC} \ , \ v_{cm} = \frac{V_{DC}}{2}$$

4) Second recirculation condition: T1, T3, T6, D3 ON (T2, T4, T5 OFF); $v_{AB} = 0$; current recirculation on the high side of the H-bridge through T1, D3,

$$v_{cm} = v_{A0} = v_{B0} = \frac{V_{DC}}{2}$$

It should be noted that, still within the scope of the invention, also a different type of modulation can be used, which enables the down times present between turning on and off of two controlled switches of the same "leg" of the H-bridge 20 to be taken into account, so as to avoid a common-mode voltage variation and therefore an increase in the leakage currents to the ground.

The further improvement in terms of efficiency in conversion is obtained by reducing the switching-over losses of the controlled switches. Since converter 1 must always inject electric power with a substantially unitary power factor, the H-bridge 20 will always work in two quadrants alone of the four available ones: positive voltage, positive current (first quadrant) and negative voltage, negative current (third quadrant). In this manner it is possible to keep one of the two diagonals of the H-bridge 20 fully off during each positive or negative half cycle of the imposed network voltage.

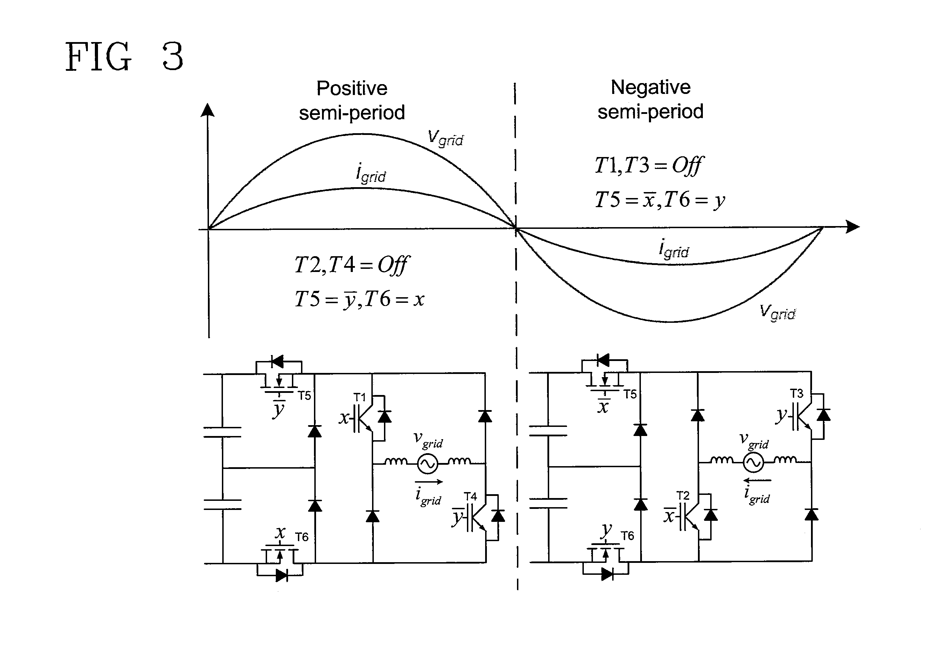

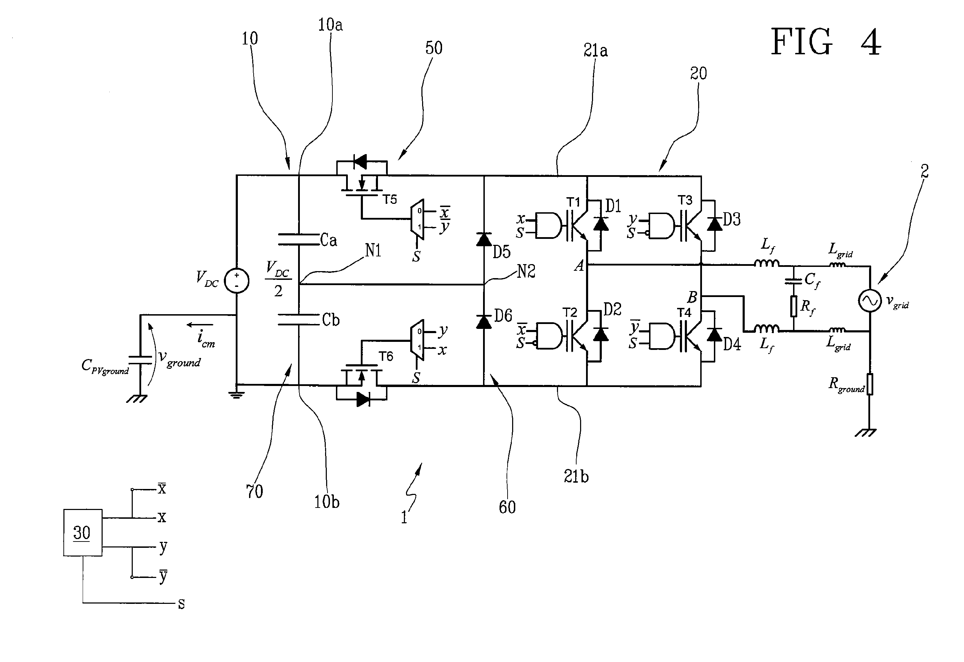

Figs. 3 and 4 show this further modulation strategy that is therefore able to improve the efficiency of converter 1 by maintaining the leakage currents to the ground limited.

In particular, in Fig. 4 symbol S, put at the input of AND and Multiplexer logic gates, represents a Boolean variable taking the logic value 0 during the negative half cycle and the logic value 1 during the positive half cycle of the network voltage.

The invention achieves important advantages.

First of all, the DC-AC converter is able to greatly limit the leakage currents to the ground as compared with the classic single-pole modulation.

In addition, converter 1 allows use of the advantages of the single-pole modulation to be continued also in transformerless architectures.

Another advantage of the converter of the invention consists in the capability of supplying electric power as an output with a substantially unitary power factor and a low harmonic distortion.

It will be also appreciated that the architecture in question by maintaining the common-mode voltage outputted from the H-bridge constant, intrinsically allows the electromagnetic-compatibility problems to be reduced. The common-mode voltage/current components in fact are one of the main causes of electromagnetic interference.

A further advantage of the proposed architecture is the possibility of using a single-pole modulation for the H-bridge also in photovoltaic transformerless applications. Relative to other known solutions, the proposed architecture allows the same oscillation value of the current oscillation outputted from the H-bridge to be obtained, the inductances being the same, with a PWM frequency corresponding to half that used in known topologies. In other words, the PWM frequency being the same, it is possible to obtain the same current oscillation with filter inductances of a value reduced by a factor equal to 1/2.

With the aid of the compensation module 60, the maximum voltage at the ends of the two transistors T5 and T6 of the DC uncoupling block appears to be equal to $V_{DC}/2$, thus enabling two lower-voltage transistors obtained by the MOSFET technology to be used as the transistors T5 and T6. This allows the dissipative losses on these two devices to be reduced.

In addition, in the architecture of the invention the recirculation current always and uniquely flows in two semiconductor devices alone and not in four series devices as it happens in some solutions of the known art. In this manner, the dissipative losses by conduction are limited.

**Claims**

1. A DC-AC converter, in particular for providing electric energy from a solar panel to an electric network, comprising:

   - an input section (10) for receiving a substantially direct voltage;
   - an H-bridge (20) substantially adapted to receive said substantially direct current through said input section (10) and designed to output a substantially alternating voltage,
   - said H-bridge (20) being drivable at least in the following conditions:

     · at least one operating condition, at which electric energy is supplied to said electric network (2);
     · a first and a second recirculation condition,

at which a current flows through at least part of said H-bridge (20), and no electric energy is supplied to said electric network (2);

- an output section (40) to supply said substantially alternating current to said electric network (2),

said converter (1) further comprising an uncoupling module (50) operatively interposed between said input section (10) and said H-bridge (20) and conveniently configured for uncoupling said input section (10) from said H-bridge (20) at said first and second recirculation conditions of said H-bridge (20).

2. A converter as claimed in claim 1, further comprising a control unit (30) connected to said H-bridge (20) for driving the latter between said configurations.

3. A converter as claimed in claim 2, wherein said control unit (30) is active on said H-bridge (20) for driving the latter in a single-pole modulation.

4. A converter as claimed in claim 3, wherein said single-pole modulation comprises the following conditions subsequent in time:

- a first operating condition, at which electric energy is supplied to said network (2);
- a first recirculation condition, at which a current flows through at least part of said H-bridge (20), and no electric energy is supplied to said electric network (2) ;
- a second operating condition, at which electric energy is supplied to said electric network (2);
- a second recirculation condition, at which a current flows through at least part of said H-bridge (20) and no electric energy is supplied to said electric network (2).

5. A converter as claimed in anyone of claims 2 to 4, wherein said control unit (30) is operatively associated with said uncoupling module (50) for operating the same in such a manner that said input section (10) is uncoupled from said H-bridge (20) at said first and second recirculation conditions of said H-bridge (20).

6. A converter as claimed in anyone of the preceding claims, further comprising a compensation module (60) for maintaining a common-mode voltage outputted from said H-bridge (20) substantially constant.

7. A converter as claimed in claim 6, wherein said compensation module (60) is interposed between said input section (10) and said H-bridge (20), and in particular between said uncoupling module (50) and said H-bridge (20).

8. A converter as claimed in claim 7, further comprising a voltage divider (70), associated with said compensation module (60), for determining a reference value to which said common-mode voltage is maintained.

9. A converter as claimed in anyone of the preceding claims, wherein said input section (10) has a first and a second terminal (10a, 10b) that can be respectively coupled to a first and a second input terminal (21a, 21b) of said H-bridge (20), said uncoupling module being provided with:

- a first switch (T5), configured for uncoupling the first terminal (10a) of the input section (10) from the first input terminal (21a) of the H-bridge (20) at the second recirculation condition;
- a second switch (T6), configured for uncoupling the second terminal (10b) of the input section (10) from the second input terminal (21b) of the H-bridge (20) at the first recirculation condition.

10. A system for converting solar energy into electric energy, comprising:

- a solar panel (PV), adapted to receive solar energy and convert it into a substantially direct electric voltage;
- a DC-AC converter (1) as claimed in anyone of claims 1 to 9, operatively connected to said solar panel (1).

# FIG 1

# FIG 2

# FIG 3

Positive semi-period

Negative semi-period

$V_{grid}$

$i_{grid}$

$T1, T3 = Off$

$T5 = \bar{x}, T6 = y$

$i_{grid}$

$T2, T4 = Off$

$T5 = \bar{y}, T6 = x$

$V_{grid}$

EP 2 262 093 A1

FIG 4

EP 2 262 093 A1

Europäisches
Patentamt

European
Patent Office

Office européen
des brevets

# EUROPEAN SEARCH REPORT

**Application Number**

EP 10 16 5203

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | EP 2 053 730 A1 (INGETEAM ENERGY S A [ES]) 29 April 2009 (2009-04-29) <br> * figure 3 * <br> * paragraph [0001] - paragraph [0002] * <br> * paragraph [0008] * <br> * paragraph [0017] - paragraph [0019] * <br> * claim 12 * <br> ----- | 1-10 | INV. <br> H02M7/5388 <br> H02J3/38 |
| X | US 2005/286281 A1 (VICTOR MATTHIAS [DE] ET AL VICTOR MATTHAIS [DE] ET AL) 29 December 2005 (2005-12-29) <br> * figures 1-4 * <br> * paragraph [0033] - paragraph [0036] * <br> ----- | 1-5,9,10 | |
| A | DE 10 2005 047373 A1 (SCHEKULIN DIRK [CH]) 5 April 2007 (2007-04-05) <br> * figures 3A-3D,5,6 * <br> * paragraph [0034] - paragraph [0048] * <br> ----- | 1-10 | |
| | | | **TECHNICAL FIELDS SEARCHED (IPC)** <br><br> H02M <br> H02J |

The present search report has been drawn up for all claims

| Place of search | Date of completion of the search | Examiner |
|---|---|---|
| The Hague | 6 August 2010 | Despis, Enguerran |

EPO FORM 1503 03.82 (P04C01)

## ANNEX TO THE EUROPEAN SEARCH REPORT
## ON EUROPEAN PATENT APPLICATION NO.

EP 10 16 5203

This annex lists the patent family members relating to the patent documents cited in the above-mentioned European search report.
The members are as contained in the European Patent Office EDP file on
The European Patent Office is in no way liable for these particulars which are merely given for the purpose of information.

06-08-2010

| Patent document cited in search report | | Publication date | Patent family member(s) | | Publication date |
|---|---|---|---|---|---|
| EP 2053730 | A1 | 29-04-2009 | WO 2008015298 A1<br>US 2009316458 A1 | | 07-02-2008<br>24-12-2009 |
| US 2005286281 | A1 | 29-12-2005 | CN 1713503 A<br>DE 102004030912 B3<br>EP 1626494 A2<br>HK 1084248 A1<br>JP 4258739 B2<br>JP 2006014591 A | | 28-12-2005<br>19-01-2006<br>15-02-2006<br>19-06-2009<br>30-04-2009<br>12-01-2006 |
| DE 102005047373 A1 | | 05-04-2007 | NONE | | |

EPO FORM P0459

For more details about this annex : see Official Journal of the European Patent Office, No. 12/82